# EUROPÄISCHE PATENTANMELDUNG

(11) **EP 2 365 491 A1**
(43) Veröffentlichungstag der Anmeldung: **14.09.2011**
(21) Anmeldenummer: 10155848.4
(22) Anmeldetag: 08.03.2010
(51) Int. Cl.: H01B 3/18, H01B 3/30, H01B 3/40, C08K 3/04, C08K 3/22, C08K 5/00, C08K 5/01, C08K 5/17, C08K 5/29, C08L 63/00, C08L 75/06, C08L 75/08, C08L 83/00

(54) **Elektroisolierstoffe mit feldstärkeabhängigem Durchgangswiderstand**

(71) Anmelder: GT Elektrotechnische Produkte GmbH, 79761 Waldshut-Tiengen (DE)
(72) Erfinder: Paulmann, Uwe, 79790 Küssaberg (DE); Tsonev, Tsvetomir, 15745 Wildau (DE)
(74) Vertreter: Rasch, Dorit

(57) **Zusammenfassung**

Diese Erfindung betrifft neuartige Elektroisolierstoffe auf der Basis von Reaktionsharzen mit nanoskaligen partikulären Füllstoffen, durch die in Abhängigkeit von der auf sie wirkenden elektrischen Feldstärke der Durchgangswiderstand des Materials in einem weiten Bereich gesteuert und auf die Erfordernisse des Gesamtmoduls eingestellt wird.

Aufgabe der Erfindung ist es deshalb, spezielle Elektroisolierstoffe bereitzustellen, durch die in Abhängigkeit von der auf sie wirkenden elektrischen Feldstärke der Durchgangswiderstand des Materials in einem weiten Bereich gesteuert und auf die Erfordernisse des Gesamtmoduls eingestellt werden kann. Insbesondere soll die Bäumchenbildung wesentlich reduziert oder verhindert sowie eine Brennbarkeit reduziert werden.

Erfindungsgemäß wird die Aufgabe dadurch gelöst, dass Elektroisolierstoffe auf der Basis von Reaktionsharzen mit nanoskaligen partikulären Füllstoffen bereitgestellt werden, die bestehen aus:
a) einem Reaktionsharz, das aus mindestens zwei Komponenten besteht, und ein oder mehrere nanoskalige partikuläre anorganische Füllstoffe umfasst,
b) und gegebenenfalls weiteren Komponenten ausgewählt aus der Gruppe umfassend Katalysatoren, Reaktionsinhibitoren, Füllstoffen, Farbstoffen und Pigmenten und Gemische derselben bestehen.

## Beschreibung

Diese Erfindung betrifft neuartige Elektroisolierstoffe auf der Basis von Reaktionsharzen mit nanoskaligen partikulären Füllstoffen, durch die in Abhängigkeit von der auf sie wirkenden elektrischen Feldstärke der Durchgangswiderstand des Materials in einem weiten Bereich gesteuert und auf die Erfordernisse des Gesamtmoduls eingestellt wird.

Die Herstellung von Elektroisolierstoffen auf der Basis von Reaktionsharzen ist bekannt. So werden z. B. Vergussmassen auf der Basis von Epoxydharzen, Silikonen oder Polyurethanen verwendet. Weiterhin kommen Vergussmassen auf der Basis von polymerisationsfähigen Dienen zum Einsatz, z. B. Polybutadiene, Ethylen-Propylen-Dien-Mischpolymerisate (EPDM) oder Polyneoprene. In diese Reaktionsharze werden vielfältige Füllstoffe zur weiteren Einstellung der Eigenschaften eingearbeitet, z. B. Makrofüllstoffe wie Kreide, Schwerspat, Kaolin oder Quarzmehl. Andere Füllstoffe sollen bestimmte Eigenschaften gezielt verbessern, z. B. die Wärmeleitfähigkeit durch den Einsatz von Metallcarbiden, den Flammschutz durch Graphitoxide oder die Leitfähigkeit durch Graphit bzw. Graphitderivate.

In neuerer Zeit wurde der Einsatz von nanoskaligen Füllstoffen in den Reaktionsharzen zur Erzielung besserer Flammfestigkeit und einer hohen Leitfähigkeit bis in den Bereich von 0,1 Ω/cm beschrieben. Um diese Effekte zu erzielen, wurden nanoskalige Tone, z. B. Montmorrolinit oder Vermucillit sowie Schichtsilikate eingesetzt, ohne die gewünschte Wirkung in ausreichendem Maße zu erzielen. In weiteren technischen Lösungen wurden seit 2004 Graphene eingesetzt, um die Leitfähigkeit der Polymere, hier in erster Linie Polystyren, zu verbessern, siehe dazu S. Stankovich, D. A. Dikin, G. H. B. Dommett, K. M. Kohlhaas, E. J. Zimney, E. A. Stach, R. D. Piner, S. T. Nguyen, R. S. Ruoff, Graphene-based composite materials, Nature 442, 282-286 (2006).

Polymer-Komposite auf der Basis von Graphen oder Kohlenstoff-Nanoröhrchen wurden mit Polystyrol und Polyimid hergestellt und dabei eine extrem niedrige Perkolationsschwelle bei Zimmertemperatur von nur etwa 0,1 Vol.-% gefunden. Diese Menge ist die niedrigste bisher gefundene Dotierung, um Polymere leitfähig zu machen. Die Herstellung von elektrisch leitenden Graphen-Polymer-Kompositen kann mittels Mischung von Lösungen erfolgen, so dass die einzelnen Graphenschichten sehr gut in der Matrix dispergiert sind. Da Graphenschichten, bedingt durch die Herstellung, mehr oder weniger hydrophile Oberflächen aufweisen, ist die Einarbeitung in hydrophobe Polymermatrices problematisch und erfordert in der Regel eine spezielle (chemische) Behandlung der Oberflächen. Durch das Verfahren der Herstellung von Polymer-Graphen-Kompositen in Lösung können die Makromoleküle die Graphenoberfläche "beschichten" und damit eine Agglomeration verhindern. Ähnliche Ergebnisse wurden mit Kohlenstoff-Nanoröhrchen gefunden, die durch Lösungsvergießen zu Filmen erhalten wurden. Auch bei diesen Polyurethan-Membranen wurde ein Anstieg der elektrischen Leitfähigkeit von 0,00001 S/cm bei 0,01 % Additiv auf 0,0011 S/cm bei 1,4 % Additiv festgestellt, wobei die elektrische Leitfähigkeit der Filme zusätzlich vom Substitutionsgrad der Graphenoberfläche abhängig ist.

Weiterhin wurden Graphen-Gummi-Nanokomposite beschrieben (WO 2008/045778 A1). Danach werden funktionalisierte Graphenschichten in bestimmte Elastomere eingearbeitet, wodurch die mechanische Festigkeit, die Zähigkeit, der Modul, die thermische Stabilität und die elektrische Leitfähigkeit der Komposite verbessert werden. Als Polymermatrix werden wiederum nahezu alle bekannten Polymere benannt, insbesondere aber vernetzte Polyesterurethan-Elastomere, dazu auch Polycaprolacton-Polyurethan-Elastomere, Polytetrahydrofuran-Polyurethan-Elastomere und Polyhydroxybutadien-Polyurethan-Elastomere. Außerdem können thermoplastische Polyurethane, Polydimethylsiloxane oder Naturgummi verwendet werden. Durch den Zusatz des Graphens werden in den Kompositen die elektrischen Leitfähigkeiten mit dem Faktor 10¹¹ bis 10¹⁸ bei einem Füllgrad von 0,1 bis 20 Gew-% verbessert.

Solarmodule auf der Basis eines Komposits unter Verwendung von Graphit, Kohlenstoffröhrchen oder Graphen sind in US 2009/0173334 A1 offenbart. Die Oberflächen der Komposite werden durch den Einsatz der Nanopartikel elektrisch und thermisch leitfähig. Gemäß US 2009/0017211 A1 werden durch die Ablagerung von Graphenplättchen auf Polymeroberflächen transparente und leitfähige Filme erhalten. Elektrisch leitfähige kompakte Materialien für Kontakte oder Leiter, die aus nanoskaligen Kompositmaterialien bestehen, die in der Matrix eingebettet sind und die Matrix die Einzelkristallite voneinander trennt, können der WO 2009/ 080372 A1 entnommen werden.

Allen bisherigen technischen Lösungen ist gemeinsam, dass die nanoskaligen Graphenpartikel zur Erhöhung der elektrischen Leitfähigkeit eingearbeitet werden und durch eine hohe Leitfähigkeit ein elektrischer Leiter zur Verfügung gestellt werden soll. Dabei werden Graphenpartikel in einer Menge zwischen 0,1 Gew.-% und 20 Gew.-% bezogen auf das Basispolymer verwendet.

Bekannte Vergussmassen haben den Nachteil, dass es zur "Bäumchenbildung" kommen kann. Unter Bäumchenbildung wird in der Elektrotechnik die Ausbildung von Mikrorissen und deren Fortpflanzung im Material zu komplexen Rissgebilden, die in ihrem Aussehen Bäumchen ähneln, verstanden. Durch diese Risse wird das Material irreversibel geschädigt, die Isolationseigenschaften verändern sich und es kommt in Folge zu Kurzschlüssen.

Aufgabe der Erfindung ist es deshalb, spezielle Elektroisolierstoffe bereitzustellen, durch die in Abhängigkeit von der auf sie wirkenden elektrischen Feldstärke der Durchgangswiderstand des Materials in einem weiten Bereich gesteuert und auf die Erfordernisse des Gesamtmoduls eingestellt werden kann. Insbesondere soll die Bäumchenbildung wesentlich reduziert oder verhindert sowie eine Brennbarkeit reduziert werden.

Überraschend wurde gefunden, dass die Dotierung von Reaktionsharzen, die aus mindestens zwei Komponenten hergestellt werden, mit bestimmten nanoskaligen Additiven eine feldabhängige Leitfähigkeit ausbildet, indem sich entweder die nanoskaligen Teilchen in viskoelastischen Produkten in Richtung der elektrischen Feldlinien ausrichten und bei Berührung miteinander einen Elektronenübergang ermöglichen, der von der Konzentration dieser Teilchen sowie ihrer Größe und Form abhängig ist, oder sich in harten Produkten über die Nanopartikel eine mehr oder weniger homogene Elektronenstruktur ausbildet, die zu einer Verringerung des an sich hohen Widerstandes des Basispolymeren führt.

Erfindungsgemäß wird die Aufgabe dadurch gelöst, dass Elektroisolierstoffe auf der Basis von Reaktionsharzen mit nanoskaligen partikulären Füllstoffen bereitgestellt werden, die bestehen aus:
a) einem Reaktionsharz, das aus mindestens zwei Komponenten besteht, und ein oder mehrere nanoskalige partikuläre anorganische Füllstoffe umfasst,
b) und gegebenenfalls weiteren Komponenten ausgewählt aus der Gruppe umfassend Katalysatoren, Reaktionsinhibitoren, Füllstoffen, Farbstoffen und Pigmenten und Gemische derselben bestehen.

Gemäß vorliegender Erfindung besteht mindestens eine Komponente des Reaktionsharzes im wesentlichen aus einem Basispolymer enthaltend mindestens zwei reaktive Gruppen, welches einen nanoskaligen, aktiven Füllstoff ausgewählt aus der Gruppe umfassend Graphen, Aluminiumoxid, Aluminiumoxidhydroxid, Aluminiumhydroxid, Zinkoxid, Zinkoxidhydroxid, Zinkhydroxid und Indiumoxid bzw. Mischoxide auf der Basis Zink, Indium, seltener Erden sowie Gemische derselben aufweist, die jeweils mit 0,0001 bis 2 Gew.-% vorliegen, und die keine Aggregate bilden, und mindestens eine weitere Komponente aus einem oder mehreren Härtern wie Di- und/oder Polyisocyanaten bzw. Vorpolymerisaten auf der Basis eines oder mehrerer Isocyanate, Di- und/oder Polyamine oder Polymerisationsinitiatoren.

Nach Umsetzung der reaktionsfähigen Gruppen aller Reaktionskomponenten und gegebenenfalls Formgebung wird ein elektroisolierendes Reaktionsharz mit einem Widerstand von 10⁵ bis 10¹⁸ Ω/cm gebildet.

Geeignete nanoskalige Partikel sind einerseits Graphene, d. h. einatomige Schichten von Kohlenstoff in Graphitstruktur, die eine Elektronenleitung ermöglichen, und andererseits bestimmte anorganische Verbindungen mit einer Kombination von Oxid- und Hydroxidgruppen, z. B. die oben genannten, in weniger bevorzugtem Maße auch Schichtsilikate. Diese Verbindungen kommen zu einem großen Teil auch natürlich vor, z. B. als Boehmit, Hydroxylapatit, Hydrotalcite, Vermicullit, Montmorrolinit usw. Diese Mineralien - unabhängig davon, ob synthetisch hergestellt oder als Naturprodukt - können in sehr kleinen Dimensionen gewonnen oder hergestellt werden. Typische Teilchengrößenverteilungen liegen mit einem Maximum z. B. zwischen 5 nm und 700 nm. Größere Teilchen weisen überraschend die erwünschte Wirkung nur in einem wesentlich höheren Konzentrationsbereich auf und nicht in der ausgeprägten Form, wie bei den Nanopartikeln.

Geeignete Basispolymere sind Polyepoxyde auf der Basis von Di- und/oder Polyepoxyden sowie Di- und/oder Polyaminen bzw. Dicarbonsäureanhydriden oder Dicarbonsäuren als Härter, Polydimethylsiloxane, Gemische aus Siloxanen und Silanen, die radikalisch oder ionisch gehärtet werden, Polybutadiene, bei denen ein niedermolekulares Polybutadien mit einem radikalischen Härter oder einem Silan vernetzt wird, Polyesterurethan-Elastomere oder -Gießharze, Polycaprolacton-Polyurethan-Elastomere, Polytetrahydrofuran-Polyurethan-Elastomere und Polyhydroxybutadien-Polyurethan-Elastomere, Polyetherurethanelastomere oder -Gießharze, Polyurethangele, Polyurethane auf der Basis von Gemischen mit natürlichen Ölen oder Ölprodukten, harte Polyurethanharze oder Polyharnstoffe auf der Basis von aliphatischen Di- und/oder Polyaminen bzw. aromatischen Di- und Polyaminen oder Gemischen davon sowie thermoplastische Polyurethane oder radikalisch vernetzender Naturgummi.

Bevorzugt verwendete Reaktionsharze stellen ein Zwei-Komponenten-System dar auf der Basis
- eines Polyesteralkohols auf der Basis von Terephthalsäure und einem oder mehreren Glykolen sowie gegebenenfalls zwischen 2 und 50 % nativen Ölen oder eines Polyetheralkohols oder eines Gemisches von Polyetheralkoholen und gegebenenfalls einem oder mehreren Glykolen sowie
- eines Di- und/oder Polyisocyanats
wobei ihre Shore-D-Härte bzw. Shore-A-Härte zwischen 20 und 80 liegt.

Als Glykole werden z. B. Ethylenglykol, Diethylenglykol, höhere homologe Ethylenglykole bis zu einer Molmasse von 600, Neopentylglykol, 2-Ethyl-1,3-hexandiol oder Gemische davon eingesetzt.

In einer bevorzugten Ausführungsvariante enthält das Reaktionsharz zwischen 5 und 60 Gew.-% eines natürlichen Öls oder Ölprodukts. Als Öle werden vorzugsweise Sojaöl, Rapsöl oder Tallöl oder deren Gemische verwendet, jedoch können auch Leinöl, Kürbiskernöl, Rübsenöl, Traubenkernöl, Hanföl usw. verwendet werden. Weiterhin können Paraffinöle allein oder im Gemisch mit den obigen Ölen eingesetzt werden. Darüber hinaus sind Turbinenöle unterschiedlicher Zusammensetzung geeignet.

Als nanoskaliger Füllstoff dient insbesondere Graphen, synthetisches Alumiumoxidhydroxid und/oder natürliches Boehmit, ein Gemisch aus Graphen und Boehmit, ein Gemisch aus Graphen, Boehmit und Zinkoxid, ein Gemisch aus Boehmit und Zinkoxid, ein Indium-Zink-Mischoxid allein oder in Kombination mit Graphen.

Besonders bevorzugt werden spezielle Polyurethan-Reaktionsharze
- auf der Basis langkettiger Polyetheralkohole, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und Di- und/oder Polyisocyanaten, deren Shore-A-Härte zwischen 20 und 80 liegt, oder
- auf der Basis von kurzkettigen Polyesteralkoholen, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und Di- und/oder Polyisocyanaten, deren Shore-D-Härte zwischen 20 und 80 liegt, oder
- auf der Basis von kurzkettigen Polyesteralkoholen im Gemisch mit 2 bis 60 Gew.-% natürlichen Ölen oder Ölprodukten, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und Di- und/oder Polyisocyanaten, deren Shore-D-Härte zwischen 20 und 80 liegt, oder
- auf der Basis langkettiger ω,ω'-Polybutadiendiole, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und Di- und/oder Polyisocyanaten, deren Shore-A-Härte zwischen 20 und 80 liegt, oder
- auf der Basis von kurzkettigen Polyetheralkoholen ggf. im Gemisch mit 2 bis 60 Gew.-% natürlichen Ölen oder Ölprodukten, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und Di- und/oder Polyisocyanaten, deren Shore-D-Härte zwischen 20 und 80 liegt.

Die o. g. Polyurethan-Reaktionsharze können weitere Komponenten enthalten, z. B. Katalysatoren, Reaktionsverzögerer, Farbstoffe, Pigmente, weitere anorganische und/oder organische Füllstoffe oder Flammschutzmittel.

Weiterhin bevorzugt werden Reaktionsharze aus kurzkettigen Butadien-Polymeren mit Molmassen zwischen 500 und 5000, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, die mittels Silanen unter Formgebung vernetzt werden und eine Shore-A-Härte zwischen 20 und 80 aufweisen.

Weiterhin bevorzugt werden Reaktionsharze aus Bisphenol-A-Glycidethern, in die zwischen 0,0001 und 2 Gew.-% eines nanoskaligen Graphens und 0,0001 bis 2 Gew.-% eines weiteren nanoskaligen, aktiven Füllstoffs eingearbeitet wurden, und aminischen Härtern, z. B. aliphatischen Di- und/oder Polyaminen oder auf niedermolekulare Glycidether addierten Diaminen oder heterocyclische Aminen.

Die erfindungsgemäßen Reaktionsharze mit den nanoskaligen, im elektrischen Feld aktiven Additiven werden üblicherweise in Zwei-Komponenten-Technik hergestellt, indem
a) die beiden Komponenten in getrennte Kompartimente eines Reaktionsgefäßes, z. B. eines gasundurchlässigen Folienbeutels, gefüllt und bei Bedarf miteinander vermischt werden, wodurch die erfindungsgemäßen Reaktionsharze gebildet werden,
b) die beiden Komponenten in die Vorratsbehälter einer Zwei-Komponenten-Mischmaschine gefüllt und über einen Mischkopf in der gewünschten Menge ausgetragen werden, wodurch in dem verwendeten Werkzeug oder auf der Fläche die erfindungsgemäßen Reaktionsharze gebildet werden,
c) die beiden Komponenten in zwei getrennten Behältern vorgemischt, diese Mischungen unter Rühren vermischt und in die geeignete Form gegeben werden, wodurch die erfindungsgemäßen Reaktionsharze gebildet werden,
d) die erfindungsgemäßen Komponenten aus einer Reaktionskomponente und den nanoskaligen aktiven Partikeln, weitere Komponenten sowie die zweite Reaktionskomponente über eine Mischanlage mit Mehrfachmischkopf vermischt und in der gewünschten Menge ausgetragen werden, wodurch in dem verwendeten Werkzeug oder auf der Fläche die erfindungsgemäßen Reaktionsharze gebildet werden,
e) die erfindungsgemäßen Komponenten aus einer Reaktionskomponente und den nanoskaligen aktiven Partikeln, weitere Komponenten sowie die zweite Reaktionskomponente über eine Mischanlage mit Mehrfachmischkopf vermischt und unter Hochdruck in der gewünschten Menge ausgespritzt werden, wodurch auf der Fläche die erfindungsgemäßen Reaktionsharze als Oberflächenbeschichtung gebildet werden.

Überraschend können die Nanopartikel zur Eigenschaftssteuerung eingesetzt werden, wobei die Elektroisolierstoffe durch die Verwendung der Nanopartikel eine Wirkung in Bezug auf die Beständigkeit der Schichten in unmittelbarer Nachbarschaft von elektrischen Leitern bei Spannungen oberhalb 100 V aufweisen. Die Verwendung der Nanopartikel führt zur Vermeidung der "Bäumchenbildung" bei Vergussmassen.

Bekanntermaßen steigt bei der Einarbeitung von metallischen Nanopartikeln (Ag, Au, Ti) in Polymere, z. B. PTFE, bei einer bestimmten Konzentration, die als Perkolationsschwelle bezeichnet wird, die Leitfähigkeit sprunghaft um mehrere Zehnerpotenzen an, was auf eine Verbindung der Teilchen und dem damit wesentlich leichteren Elektronentransport zurückgeführt wird, der auch thermisch unterstützt werden kann. Nahe der Perkolationsschwelle wird der Ladungstransport durch das thermisch aktivierte Fließen der Elektronen von Nanopartikel zu Nanopartikel gesteuert.

Im erfindungsgemäßen Verfahren ist neben der Konzentration der Füllstoffe ein weiterer Einflussfaktor die Art und Weise der Verarbeitung. Je intensiver die Durchmischung und je höher die Scherkräfte, d. h. je weitergehend die Zerstörung von Agglomerationen und Vereinzelungen, desto niedriger wird die Perkolationsschwelle. Die Teilchengröße der nanoskaligen Teilchen wird erfindungsgemäß durch Scherkräfte von 20 bis 2000 Nm erreicht, wobei niedrige Scherkräfte, z. B. zwischen 20 und 200 Nm, zu teilagglomerierten Teilchen führen, bei denen das Springen der Elektronen (electron hopping) zwischen den agglomerierten Teilchen erfolgt. Bei höheren Scherkräften, z. B. oberhalb 400 Nm, werden in der Regel wenig oder nicht agglomerierte Teilchen erhalten, so dass dadurch die Perkolationsschwelle gesenkt wird. Bevorzugt kommen deshalb Scherkräfte zwischen 400 bis 2000 Nm zum Einsatz.

Die erfindungsgemäßen Polyurethan-Graphen- oder Polyurethan-Kohlenstoffröhrchen-Komposite sowie Verfahren zu ihrer Herstellung sind bisher nicht bekannt. Es konnte anhand bevorzugt bereitgestellter Polyurethan-Graphen- bzw. Polyurethan-Graphen-Boehmit-Komposite gezeigt werden, dass der Verzweigungsgrad der Polyolkomponente und/oder des Polyisocyanats eine wesentliche Rolle spielt: je höher die Vernetzungsdichte, desto niedriger die Perkolationsschwelle und desto niedriger auch die Menge der einzusetzenden Nanoteilchen, um den erfindungsgemäßen Effekt zu erzielen. Bei einem rein linearen Polyetherurethan und Graphen als Nanopartikel (2 bis 23 nm) wurde ein Beginn des Anstiegs der Leitfähigkeit bei 0,22 Gew.-% festgestellt. Wurde ein Polyurethan aus einem trifunktionellen Polyetheralkohol der Molmassse 5000 und einem Polyisocyanat (p-MDI) hergestellt und dieses mit nanoskaligem Graphen versetzt, so verringerte sich die Menge an Graphen bis zum Erreichen der Perkolationsschwelle auf 0,009 Gew.-%. Damit ist gezeigt, dass durch die erfindungsgemäße Kombination aus bestimmten, in ihrer Struktur definierten Polyurethanen und bestimmten Nanopartikeln wie Graphen oder Gemische aus Graphen und weiteren anorganischen Nanopartikeln der erfindungsgemäße Effekt der feldstärkeabhängigen Perkolationsschwelle und damit des Gradienten der Leitfähigkeit als Funktion des Abstandes vom Leiter erzielt wird.

Eine weitere Variable, mit der die Leitfähigkeit und damit die Perkolationsschwelle der Komposite beeinflusst wird, ist der Segregationsgrad der weichen und harten Domänen des Polyurethans. Harte Domänen werden aus den Isocyanaten und Kettenverlängerern gebildet, die weichen Domänen durch die Polyolkomponente(n). Der Segregationsgrad ist abhängig von der Löslichkeit der Struktureinheiten ineinander. Über diese Struktureinheiten kann der Grad der Phasentrennung gesteuert werden, z. B. verbessert sich die Löslichkeit der Hartsegmente mit zunehmendem Ethylenoxidanteil in Polyetheralkoholen auf Basis Propylen- und Ethylenoxid. Die Art des Kettenverlängerers ist eine weitere Steuergröße; so wird die Segregation durch Butan-1,4-diol verbessert, durch Dipropylenglykol jedoch eine weitgehende Durchmischung der Phasen erreicht. Dem Fachmann sind weitere Struktureinheiten bekannt, mit dem er die Segregation der Polyurethane steuern kann.

Die erfindungsgemäße Arbeitsweise ist ein von allen bekannten Stoffmischungen und Kompositen verschieden; die erfindungsgemäßen Komposite weisen ein demgegenüber anderes, neuartiges Verhalten auf. Durch die erfindungsgemäße Arbeitsweise liegen die Perkolationsschwelle, die Leitfähigkeit und die Permittivität in einem anderen Bereich.

Wie erfindungsgemäß dargestellt, konnten erstmals mit der Kombination aus definierten Reaktionsharzen und den definierten nanoskaligen Füllstoffen Gradienten der Leitfähigkeit in Abhängigkeit von der Feldstärke elektrischer Leiter gefunden und nachgewiesen werden.

Die erfindungsgemäßen Elektroisolierstoffe weisen eine Durchschlagspannung von mindestens 100 kV auf. Im elektrischen Feld um einen elektrischen Leiter beträgt der Widerstandswert unmittelbar am Leiter z. B. 10⁵ bis 10⁸ Ω/cm, in einer Entfernung von 4 mm vom Leiter jedoch bereits 10⁷ bis 10¹⁰ Ω/cm und in einer Entfernung von 8 mm vom Leiter 10⁸ bis 10¹⁵ Ω/cm.

Die erfindungsgemäßen Elektroisolierstoffe weisen weiterhin ungewöhnlich hohe Widerstandswerte auf; so wurde z. B. ein Widerstand bei 0,001 % Graphenanteil von 50 GΩ gemessen.

Weiterhin weisen die erfindungsgemäßen Elektroisolierstoffe ein verbessertes Brandverhalten auf. Es wurde gefunden, dass bei Verwendung von 0,5 Gew.-% der nanoskaligen Partikel im Elektroisolierstoff der Sauerstoffindex (LOI-Wert) um 2 bis 4 Einheiten höher ist als beim Basispolymer ohne den Zusatz. Die Erhöhung des Brandschutzes ist abhängig von der Art des nanoskaligen Additivs und seiner Menge. Besonders wirksam in dieser Hinsicht sind Aluminiumoxid, Aluminiumoxidhydroxid, Aluminiumhydroxid, Zinkoxid, Zinkoxidhydroxid oder Zinkhydroxid. Ein weiterer Vorteil der erfindungsgemäßen Elektroisolierstoffe ist die Verbesserung der mechanischen und der Alterungseigenschaften.

Die Erfindung wird im folgenden durch einige Beispiele weiter erläutert. Auf Grund der vielfältigen Kombinationsmöglichkeiten können nur wenige davon hier dargestellt werden.

### Beispiele

### Beispiel 1

Ein Polyurethangel wird hergestellt aus einem Gemisch aus 72,05 g eines Polyetheralkohols der Molmasse 3000 auf der Basis Glycerin und Propylenoxid, Hydroxylzahl 55,5 mg KOH/g, aus 10,0 g eines Polyetheralkohols der Molmasse 420 auf der Basis Glycerin und Propylenoxid, Hydroxylzahl 402 mg KOH/g, 0,10 g Dibutylzinn-bis(2-ethyl-hexylthioglycolat) die zunächst 30 Minuten bei 55°C vorgemischt werden, zu dem 0,25 g eines durch oxidative Spaltung von Graphit hergestellten Graphens und 0,1 g eines Aluminiumoxidhydroxids von 13 nm Teilchengröße durch vorsichtiges Einmischen bei hoher Scherkraft, sowie aus 18,0 g eines verflüssigten 4,4'-Dicyclohexylmethyldiisocyanats (Lupranat® 92300) durch Vermischen mittels einer 2-Komponenten-Niederdruckmaschine und Vergießen in Formen hergestellt. Das erhaltene Polyurethangel weist eine Shore-A-Härte von 30 auf, hat eine Durchschlagspannung von 105 kV sowie eine elektrische Leitfähigkeit von 0,14 mS/cm.

### Beispiel 2

Ein Polyurethangel wird hergestellt aus einem Gemisch aus 73,0 g eines Polyetheralkohols der Molmasse 3000 auf der Basis Glycerin und Propylenoxid, Hydroxylzahl 55,5 mg KOH/g, aus 10,0 g eines Polyetheralkohols der Molmasse 420 auf der Basis Glycerin und Propylenoxid, Hydroxylzahl 402 mg KOH/g, zu dem 0,35 g eines durch oxidative Spaltung von Graphit hergestellten Graphens und 0,27 g nanoskaligen Montmorillinits von 21 nm Teilchengröße, die zunächst 30 Minuten bei 45°C bei hoher Scherkraft vorgemischt werden, sowie aus 16,0 g eines verflüssigten 4,4'-Dicyclohexylmethyldiisocyanats (Lupranat® 92300) durch Vermischen mittels einer 2-Komponenten-Niederdruckmaschine und Vergießen in Formen hergestellt. Das erhaltene Polyurethangel weist eine Shore-A-Härte von 30 auf, hat eine Durchschlagspannung von 120 kV sowie eine elektrische Leitfähigkeit von 0,19 mS/cm.

### Beispiel 3

Aus einem Gemisch von 68,5 g des Polyetheralkohols der Molmasse 3000 auf der Basis Glycerin und Propylenoxid, Hydroxylzahl 55,5 mg KOH/g, aus 9,5 g eines Polyetheralkohols der Molmasse 420 auf der Basis Glycerin und Propylenoxid, Hydroxylzahl 402 mg KOH/g, zu dem 0,15 g eines durch oxidative Spaltung von Graphit hergestellten Graphens und 0,55 g nanoskaligen Zinkoxids von 11 nm Teilchengröße, die zunächst 30 Minuten bei 45°C bei hoher Scherkraft vorgemischt werden, sowie aus 20,0 g eines verflüssigten 4,4'-Dicyclohexylmethyldiisocyanats (Lupranat® 92300) durch Vermischen mittels einer 2-Komponenten-Niederdruckmaschine und Vergießen in Formen wird das erfindungsgemäße Polyurethangel hergestellt. Das erhaltene Polyurethangel weist eine Shore-A-Härte von 20 auf, hat eine Durchschlagsfestigkeit von 120 kV/mm sowie eine elektrische Leitfähigkeit von 0,25 mS/cm..

### Beispiel 4

Ein Polyurethangel wird hergestellt aus einem Gemisch aus 64,8 g eines Polyetheralkohols der Molmasse 5000 auf der Basis Glycerin, Propylenoxid und Ethylenoxid, Hydroxylzahl 35,5 mg KOH/g, aus 4,1 g eines Polyetheralkohols der Molmasse 420 auf der Basis Glycerin und Propylenoxid, Hydroxylzahl 402 mg KOH/g, 0,10 g Dibutylzinn-bis(2-ethyl-hexylthioglycolat) die zunächst 30 Minuten bei 50°C vorgemischt werden, zu dem 0,20 g eines durch oxidative Spaltung von Graphit hergestellten Graphens und 0,25 g eines Indium-Zinkoxids von 18 nm Teilchengröße durch vorsichtiges Einmischen bei hoher Scherkraft, sowie aus 15,0 g eines verflüssigten 4,4'-Dicyclohexylmethyldiisocyanats (Lupranat® 92300) durch Vermischen mittels einer 2-Komponenten-Niederdruckmaschine und Vergießen in Formen. Das erhaltene Polyurethangel weist eine Shore-A-Härte von 22 auf, hat eine Durchschlagspannung von 115 kV sowie eine elektrische Leitfähigkeit von 0,19 mS/cm.

### Beispiel 5

Ein Polyurethangel wird hergestellt aus einem Gemisch aus 84,0 g eines Polypropylenglykols der Molmasse 2000, Hydroxylzahl 55,0 mg KOH/g, aus 3,1 g Dipropylenglykol, 0,10 g Dibutylzinn-bis(2-ethyl-hexylthioglycolat) die zunächst 30 Minuten bei 50°C vorgemischt werden, wozu 0,30 g eines durch oxidative Spaltung von Graphit hergestellten Graphens und 0,55 g eines Indium-Zinkoxids von 18 nm Teilchengröße durch vorsichtiges Einmischen bei hoher Scherkraft, sowie aus 13,0 g eines verflüssigten 4,4'-Dicyclohexyimethyldiisocyanats (Lupranat® 92300) durch Vermischen mittels einer 2-Komponenten-Niederdruckmaschine und Vergießen in Formen. Das erhaltene Polyurethangel weist eine Shore-A-Härte von 26 auf, hat eine Durchschlagspannung von 135 kV sowie eine elektrische Leitfähigkeit von 0,47 mS/cm.

### Beispiel 6

Ein Polyurethangel wird hergestellt aus einem Gemisch aus 84,0 g eines Polypropylenglykols der Molmasse 2000, Hydroxylzahl 55,0 mg KOH/g, aus 2,0 g Dipropylenglykol, 0,10 g Dibutylzinn-bis(2-ethyl-hexylthioglycolat) die zunächst 30 Minuten bei 40°C vorgemischt werden, wozu 0,10 g eines durch oxidative Spaltung von Graphit hergestellten Graphens und 0,40 g eines Zinkoxids von 8 nm Teilchengröße durch vorsichtiges Einmischen bei hoher Scherkraft, sowie aus 13,0 g eines verflüssigten 4,4'-Dicyclohexylmethyldiisocyanats (Lupranat® 92300) durch Vermischen mittels einer 2-Komponenten-Niederdruckmaschine und Vergießen in Formen. Das erhaltene Polyurethangel weist eine Shore-A-Härte von 27 auf, hat eine Durchschlagspannung von 140 kV sowie eine elektrische Leitfähigkeit von 0,35 mS/cm.

### Beispiel 7

Ein Polyurethangel wird hergestellt aus einem Gemisch aus 84,0 g eines Polypropylenglykols der Molmasse 2000, Hydroxylzahl 55,0 mg KOH/g, aus 2,1 g Dipropylenglykol, 0,10 g Dibutylzinn-bis(2-ethyl-hexylthioglycolat) die zunächst 30 Minuten bei 50°C vorgemischt werden, wozu 0,10 g eines synthetischen Aluminiumoxidhydroxyds von 21 nm Teilchengröße und 0,25 g eines Zinkoxids von 18 nm Teilchengröße durch vorsichtiges Einmischen bei hoher Scherkraft, sowie aus 14,0 g eines polymeren 4,4'-Dicyclohexylmethyldiisocyanats (Lupranat® M20A) durch Vermischen mittels einer 2-Komponenten-Niederdruckmaschine und Vergießen in Formen. Das erhaltene Polyurethangel weist eine Shore-00-Härte von 20 auf, hat eine Durchschlagspannung von 145 kV sowie eine elektrische Leitfähigkeit von 0,17 mS/cm.

### Beispiel 8

Ein Polyurethangel wird hergestellt aus einem Gemisch aus 83,0 g eines Polypropylenglykols der Molmasse 2000, Hydroxylzahl 55,0 mg KOH/g, aus 2,05 g Dipropylenglykol, 0,10 g Dibutylzinn-bis(2-ethyl-hexylthioglycolat) die zunächst 30 Minuten bei 45°C vorgemischt werden, wozu 0,20 g eines durch oxidative Spaltung von Graphit hergestellten Graphens und 0,20 g eines Indium-Zinkoxids von 18 nm Teilchengröße durch vorsichtiges Einmischen bei hoher Scherkraft, sowie aus 15,0 g eines verflüssigten 4,4'-Dicyclohexylmethyldiisocyanats (Lupranat® 92300) durch Vermischen mittels einer 2-Komponenten-Niederdruckmaschine und Vergießen in Formen. Das erhaltene Polyurethangel weist eine Shore-A-Härte von 20 auf, hat eine Durchschlagspannung von 145 kV sowie eine elektrische Leitfähigkeit von 0,15 mS/cm.

## Patentansprüche

1. Elektroisolierstoffe auf der Basis von Reaktionsharzen mit nanoskaligen partikulären Füllstoffen, **dadurch gekennzeichnet, dass** sie bestehen aus
a) einem Reaktionsharz, das aus mindestens zwei Komponenten besteht, wobei
- mindestens eine Komponente des Reaktionsharzes im wesentlichen ein Basispolymer mit mindestens zwei reaktiven Gruppen enthält, welches einen nanoskaligen, aktiven Füllstoff ausgewählt aus der Gruppe umfassend Graphen, Aluminiumoxid, Aluminiumoxidhydroxid, Aluminiumhydroxid, Zinkoxid, Zinkoxidhydroxid, Zinkhydroxid und Indiumoxid bzw. Mischoxide auf der Basis Zink, Indium, seltener Erden sowie Gemische derselben aufweist, die jeweils mit 0,0001 bis 2 Gew.-% vorliegen, und die keine Aggregate bilden, und
- mindestens eine weitere Komponente aus einem oder mehreren Härtern wie Di- und/oder Polyisocyanaten bzw. Vorpolymerisaten auf der Basis eines oder mehrerer Isocyanate, Di- und/oder Polyamine oder Polymerisationsinitiatoren sowie
b) gegebenenfalls weiteren Komponenten ausgewählt aus der Gruppe umfassend Katalysatoren, Reaktionsinhibitoren, Füllstoffen, Farbstoffen und Pigmenten und Gemische derselben,
welche nach Umsetzung der reaktionsfähigen Gruppen aller Reaktionskomponenten und Formgebung ein elektroisolierendes Reaktionsharz mit einem Widerstand von 10⁵ bis 10¹⁸ Ω/cm bilden.

2. Elektroisolierstoffe nach Anspruch 1, **dadurch gekennzeichnet, dass** das Reaktionsharz ein Polyurethan, ein Polyepoxyd, ein silanvernetzendes Polybutadien, ein vernetzendes Polysiloxan oder ein Gemisch aus Siloxan und Silan ist.

3. Elektroisolierstoffe nach Anspruch 1 oder 2, **dadurch gekennzeichnet, dass** das Reaktionsharz ein Zwei-Komponenten-System auf der Basis
- eines Polyesteralkohols auf der Basis von Terephthalsäure und einem oder mehreren Glykolen sowie gegebenenfalls zwischen 2 und 50 % nativen Ölen und
- eines Di- und/oder Polyisocyanats
mit einer Shore-D-Härte zwischen 20 und 80 ist.

4. Elektroisolierstoffe nach einem der Ansprüche 1 oder 2, **dadurch gekennzeichnet, dass** das Reaktionsharz ein Zwei-Komponenten-System auf der Basis
- eines Polyetheralkohols oder eines Gemisches von Polyetheralkoholen und gegebenenfalls. einem oder mehreren Glykolen und
- eines Di- und/oder Polyisocyanats
mit einer Shore-A-Härte zwischen 20 und 80 ist.

5. Elektroisolierstoffe nach einem der Ansprüche 1 bis 4, **dadurch gekennzeichnet, dass** das Reaktionsharz a) zwischen 5 und 60 Gew.-% eines natürlichen Öls oder Ölprodukts enthält.

6. Elektroisolierstoffe nach einem der Ansprüche 1 bis 5, **dadurch gekennzeichnet, dass** sie als nanoskaligen Füllstoff Graphen enthalten.

7. Elektroisolierstoffe nach einem der Ansprüche 1 bis 5, **dadurch gekennzeichnet, dass** sie als nanoskaligen Füllstoff synthetisches Alumiumoxidhydroxid und/oder natürliches Boehmit enthalten.

8. Elektroisolierstoffe nach einem der Ansprüche 1 bis 7, **dadurch gekennzeichnet, dass** sie als nanoskaligen Füllstoff ein Gemisch aus Graphen und Boehmit enthalten.

9. Elektroisolierstoffe nach einem der Ansprüche 1 bis 8, **dadurch gekennzeichnet, dass** sie als nanoskaligen Füllstoff ein Gemisch aus Graphen, Boehmit und Zinkoxid enthalten.

10. Elektroisolierstoffe nach einem der Ansprüche 1 bis 5, **dadurch gekennzeichnet, dass** sie als nanoskaligen Füllstoff ein Gemisch aus Boehmit und Zinkoxid enthalten.

11. Elektroisolierstoffe nach einem der Ansprüche 1 bis 5, **dadurch gekennzeichnet, dass** sie als nanoskaligen Füllstoff ein Indium-Zink-Mischoxid allein oder in Kombination mit Graphen enthalten.

12. Verfahren zur Herstellung von Elektroisolierstoffen auf der Basis von Reaktionsharzen mit nanoskaligen partikulären Füllstoffen gemäß einem der Ansprüche 1 bis 11, **dadurch gekennzeichnet, dass** sie aus einem Reaktionsharz hergestellt werden, das mindestens zwei Komponenten aufweist, wobei
a) mindestens eine Komponente des Reaktionsharzes mit einem nanoskaligen, aktiven Füllstoff ausgewählt aus der Gruppe umfassend Graphen, Aluminiumoxid, Aluminiumoxidhydroxid, Aluminiumhydroxid, Zinkoxid, Zinkoxidhydroxid, Zinkhydroxid, Zink-Indium-Mischoxid, Oxiden der seltenen Erden sowie Gemischen derselben, die jeweils mit 0,0001 bis 2 Gew.-% vorliegen, unter Vermeidung einer Aggregation der nanoskaligen Teilchen, vermischt wird, sowie
b) gegebenenfalls weitere Komponenten ausgewählt aus der Gruppe umfassend Katalysatoren, Reaktionsinhibitoren, Füllstoffen, Farbstoffen und Pigmenten und Gemischen derselben zugemischt werden, und dass
c) anschließend die Reaktionskomponente a) mit der (den) reaktionsfähigen weiteren Reaktionskomponente(n) des Reaktionsharzes und
d) gegebenenfalls unter Formgebung zu einem elektroisolierenden Reaktionsharz mit einem Widerstand von 10⁵ bis 10¹⁸ Ω/cm umgesetzt wird.

13. Verfahren zur Herstellung von Elektroisolierstoffen nach Anspruch 12, **dadurch gekennzeichnet, dass** die Reaktionskomponente a) ein aromatischer Polyesteralkohol oder ein Polyetheralkohol ist und die weitere Reaktionskomponente ein Di- und/oder Polyisocyanat.

14. Verfahren zur Herstellung von Elektroisolierstoffen nach einem der Ansprüche 12 bis 13, **dadurch gekennzeichnet, dass** als Komponente b) ein zinnorganischer Katalysator zugesetzt wird.

15. Verfahren zur Herstellung von Elektroisolierstoffen nach einem der Ansprüche 12 bis 14, **dadurch gekennzeichnet, dass** ein natürliches Öl zugesetzt wird.
